# EUROPÄISCHE PATENTANMELDUNG

(11) **EP 2 851 522 A1**
(43) Veröffentlichungstag der Anmeldung: **25.03.2015**
(21) Anmeldenummer: 13185127.1
(22) Anmeldetag: 19.09.2013
(51) Int. Cl.: F01D 25/28, F01D 25/24, B23P 6/00

(54) **Drehvorrichtung für eine Gasturbine und Verfahren zum Drehen eines Bauteils**

(71) Anmelder: Siemens Aktiengesellschaft, 80333 München (DE)
(72) Erfinder: Hülfenhaus, Armin, 40764 Langenfeld (DE); Yi Li, Gang, 200240 Shanghai (CN)

(57) **Zusammenfassung**

Die Erfindung betrifft eine Drehvorrichtung (1) für eine wenigstens teilweise geöffnete Gasturbine (2), welche dazu ausgebildet ist, auf einer Teilfuge (11) des Gehäuses (10) der wenigstens teilweise geöffneten Gasturbine (2) über wenigstens einen Verbindungsabschnitt (21) angebracht zu werden, wobei die Drehvorrichtung (1) wenigstens einen ersten Befestigungsabschnitt (31) aufweist, der dazu ausgebildet ist, mit einem Kraftübertragungsmittel (40), insbesondere wenigstens einem Seilzug (40) mechanisch zusammenzuwirken, um eine drehende Bewegung mindestens eines Bauteils der wenigstens teilweise geöffneten Gasturbine (2) mechanisch zu vermitteln.

## Beschreibung

Die Erfindung betrifft eine Drehvorrichtung für eine wenigstens teilweise geöffnete Gasturbine sowie ein Verfahren zum Drehen eines Bauteils einer derartig teilweise geöffneten Gasturbine.

Um Wartungsarbeiten bzw. Reparaturen an Bauteilen eines Verdichters bzw. einer Turbine einer Gasturbine vornehmen zu können, ist es oftmals erforderlich, die Gasturbine wenigstens teilweise zu öffnen, um so an die handzuhabenden Bauteile zu gelangen. Hierzu werden insbesondere Gehäuseteile bzw. Teile des Leitapparats entfernt, um so die Bauteile zugänglich zu machen. Je nach Reparatur bzw. Wartung kann es auch erforderlich sein, den von einem bereits teilweise geöffneten Gehäuse bzw. Leitapparat umgebenen Gasturbinenläufer zu entfernen. Dadurch werden beispielsweise die unter dem Gasturbinenläufer liegenden Teile des Leitapparats bzw. des Gehäuses zugänglich.

Das teilweise Öffnen einer Gasturbine stellt sich als technisch sehr anspruchsvoll dar und ist für den Betreiber der Gasturbine mit einem hohen Kostenaufwand verbunden. Um die dabei auftretenden Wartungszeiten bzw. Reparaturzeiten in einem wirtschaftlich sinnvollen zeitlichen Rahmen zu halten, gibt es bereits aus dem Stand der Technik Vorschläge, wie das Entfernen von Teilen des Leitapparats bzw. des Gasturbinenläufers ausgeführt werden kann. So schlägt beispielsweise die WO 2006/103152 A1 vor, bei einer bereits teilweise geöffneten Gasturbine zwischen dem Unterteil des Leitapparats und dem Unterteil des Gehäuses feststehende Rollen zu platzieren, um so in einer Schwenkbewegung beide Bauteile gegeneinander drehen zu können. Alternativ schlägt die gleiche Schrift vor, zwischen dem Gasturbinenläufer und dem Unterteil des Leitapparats feststehende Abstands- und Fixiermittel vorzusehen, so dass auch bei einem Verschwenken von Gasturbinenläufer mit Unterteil des Leitapparats diese stets in einem festen Abstand zueinander gehalten werden können. Bei beiden Ausführungsformen wird die Kraft zum Drehen der jeweiligen Bauteile durch einen Mobilkran oder auch einen Maschinenhauskran erreicht.

Der Einsatz von Mobilkränen, wie er im Stand der Technik vorgesehen ist, stellt sich jedoch als teuer und aufwendig dar. So ist ein Mobilkran, insbesondere während des Eindrehvorganges über mehrere Stunden nicht anderweitig verwendbar. Ist der Mobilkran zudem darüber noch erforderlich, um auch während der Wartungs- bzw. Reparaturarbeiten einer nichtgewollten Drehbewegung der Bauteile entgegenzuwirken, muss der Mobilkran während der gesamten Arbeitszeit zur Verfügung stehen können. Dies kann mitunter zu hohen Betriebskosten führen, da der Mobilkran nicht anderweitig eingesetzt kann.

Insofern stellt es sich als technisch erforderlich dar, eine Lösung vorzuschlagen, die die im Stand der Technik auftretenden Nachteile vermeiden kann. Insbesondere soll die vorzuschlagende Lösung in der Lage sein, eine Drehung von Bauteilen einer wenigstens teilweise geöffneten Gasturbine unter geringem technischen und zeitlichen Aufwand zu erreichen.

Diese der Erfindung zugrundeliegenden Aufgaben werden gelöst durch eine Drehvorrichtung gemäß Anspruch 1 sowie durch Verfahren zum Drehen eines Bauteils einer wenigstens teilweise geöffneten Gasturbine mittels einer solchen Drehvorrichtung gemäß den Ansprüchen 12 und 13.

Insbesondere werden diese der Erfindung zugrundeliegenden Aufgabe, gelöst durch eine Drehvorrichtung für eine wenigstens teilweise geöffnete Gasturbine, welche dazu ausgebildet ist, auf einer Teilfuge des Gehäuses der wenigstens teilweise geöffneten Gasturbine über wenigstens einen Verbindungsabschnitt angebracht zu werden, wobei die Drehvorrichtung wenigstens einen ersten Befestigungsabschnitt aufweist, der dazu ausgebildet ist, mit einem Kraftübertragungsmittel, insbesondere wenigstens einem Seilzug mechanisch zusammenzuwirken, um eine drehende Bewegung mindestens eines Bauteils der wenigstens teilweise geöffneten Gasturbine mechanisch zu vermitteln.

Weiterhin werden die der Erfindung zugrundeliegenden Aufgaben gelöst durch ein Verfahren zum Drehen eines Bauteils einer wenigstens teilweise geöffneten Gasturbine mittels einer vorab wie auch nachfolgend beschriebenen Drehvorrichtung, wobei die folgenden Schritte umfasst sind:
- Anbringen wenigstens eines Verbindungsabschnitts der Drehvorrichtung auf einer Teilfuge des Gehäuses der Gasturbine;
- Befestigen eines Kraftübertragungsmittels, insbesondere wenigstens eines Seilzugs an dem Leitapparat der Gasturbine;
- Befestigen des Kraftübertragungsmittels an dem wenigstens einen ersten Befestigungsabschnitt der Drehvorrichtung;
- Beaufschlagen des Kraftübertragungsmittels mit einer Kraft zum Drehen des Leitapparats der Gasturbine;

Weiterhin werden die der Erfindung zugrundeliegenden Aufgaben gelöst, durch ein Verfahren zum Drehen eines Bauteils einer wenigstens teilweise geöffneten Gasturbine mittels einer vorab wie auch nachfolgend beschriebenen Drehvorrichtung, wobei die folgenden Schritte umfasst sind:
- Anbringen wenigstens eines Verbindungsabschnitts der Drehvorrichtung auf einer Teilfuge des Gehäuses der Gasturbine;
- Kraftschlüssiges Verbinden einer Manschette mit dem Gasturbinenläufer der Gasturbine;
- Befestigen eines Kraftübertragungsmittels, insbesondere wenigstens eines Seilzugs an dem wenigstens einen zweiten Befestigungsabschnitt der Manschette;
- Befestigung des Kraftübertragungsmittels an dem wenigstens einen Befestigungsabschnitt;
- Beaufschlagen des Kraftübertragungsmittels mit einer Kraft zum Drehen des Gasturbinenläufers.

Die erfindungsgemäße Drehvorrichtung kann folglich über einen Verbindungsabschnitt an einer Teilfuge des teilweise geöffneten Gehäuses der Gasturbine angebracht werden. Typischerweise weist das Gehäuse eine obere Gehäusehälfte sowie eine untere Gehäusehälfte auf. Andere Unterteilungen des Gehäuses sind jedoch möglich. Die Öffnung der Gasturbine erfolgt folglich im Normalfall durch Trennung der verschiedenen Gehäuseteile voneinander, insbesondere durch Abnehmen einer oberen Gehäusehälfte von der unteren. Die Gehäuseteile sind hierbei miteinander über Teilfugen kontaktiert, wobei die Teilfugen im Normalfall geeignete Schraubengänge aufweisen, so dass die Gehäuseteile zur Verbindung miteinander fest verschraubt werden können.

Die Teilfugen dienen erfindungsgemäß zur Anbringung des wenigstens einen Verbindungsabschnitts der Drehvorrichtung, so dass die Drehvorrichtung nach Öffnung der Gasturbine, d.h. etwa nach Abnahme eines Gehäuseteils, mit diesen Teilfugen beispielsweise durch Verschraubung verbunden werden kann. Demnach ist die Drehvorrichtung zumindest bereichsweise fest mit einem oder mehreren Gehäuseteil/en der Gasturbine verbunden. Zur Vermittlung einer mechanischen Drehbewegung eines Bauteils der Gasturbine kann nun ein Kraftübertragungsmittel mit der Drehvorrichtung über wenigstens einen ersten Befestigungsabschnitt zusammenwirken. Typischerweise dient der erste Befestigungsabschnitt der Drehvorrichtung zur Kraftabstützung bzw. Kraftumleitung, so dass bei Beaufschlagung des Kraftübertragungsmittels mit einer Kraft, diese auf ein zu bewegendes Bauteil der Gasturbine übertragen werden kann. Hierzu ist typischerweise das Kraftübertragungsmittel auch mit dem betreffenden Bauteil der Gasturbine geeignet verbunden. Bei Einleitung einer Kraft in das Kraftübertragungsmittel können nun durch die Drehvorrichtung die Stütz- bzw. Umlenkkräfte in das geöffnete Gehäuse der Gasturbine eingeleitet werden, wobei gleichzeitig eine gezielte Drehbewegung des Bauteils der Gasturbine erreicht werden kann.

Da die Verbindung der Drehvorrichtung mit dem Gehäuse der Gasturbine ausreichend fest ist, reichen bereits gängige Kraftbeaufschlagungsmittel, bspw. ein Windenmotor mit angebrachter Winde, um die erforderlichen Kräfte für die Drehbewegung in das Kraftübertragungsmittel einzuleiten. Das Vorsehen eines Mobilkrans, wie es aus dem Stand der Technik bekannt ist, kann somit vermieden werden. Vielmehr kann die Drehvorrichtung verhältnismäßig kostengünstig hergestellt und leicht bevorratet werden. Bei Bedarf kann dann die Drehvorrichtung mit dem wenigstens teilweise geöffneten Gehäuse der Gasturbine verbunden werden, ohne hierbei weitere Betriebskosten für teure Vorrichtungen zu generieren.

Entsprechend der erfindungsgemäßen Drehvorrichtung bzw. Verfahren kann das Kraftübertragungsmittel zur Drehung des Gasturbinenläufers wie auch zur Drehung eines Teils des Leitapparates vorgesehen werden. Je nach zu drehendem Bauteil unterscheiden sich die erfindungsgemäßen Verfahren. Ist zur Drehung des Gasturbinenläufers etwa ein weiteres Bauteil, eine Manschette, erforderlich, über welche das Kraftübertragungsmittel mit dem Gasturbinenläufer zur Beaufschlagung einer Drehbewegung zusammenwirken kann, so ist bei der Bewirkung einer Drehbewegung eines Teils des Leitapparates nicht unbedingt ein weiteres Bauteil erforderlich. Vielmehr ist es bspw. bereits ausreichend, dass der Leitapparat selbst mit dem Kraftübertragungsmittel zur Beaufschlagung mit einer Drehbewegung geeignet zusammenwirken kann. Hierbei weist der Leitapparat bspw. ebenso wie die Manschette der vorab beschriebenen Ausführungsform, wenigstens einen zweiten Befestigungsabschnitt auf, über welchen das Kraftübertragungsmittel mit der Drehvorrichtung zusammenwirken kann.

Gemäß einer ersten besonders bevorzugten Ausführungsform der Erfindung ist vorgesehen, dass die Drehvorrichtung bei erfolgter Anbringung an dem Gehäuse einen Gasturbinenläufer der wenigstens teilweise geöffneten Gasturbine teilweise umgibt. Der Gasturbinenläufer kann hierbei, wie auch in allen anderen Ausführungsformen, als Rotor mit einer Anzahl an Laufschaufeln bzw. einer Anzahl an Laufschaufelreihen ausgebildet sein. Durch das teilweise Umgeben des Gasturbinenläufers durch die Drehvorrichtung ist eine vorteilhafte mechanische Wechselwirkung zwischen Drehvorrichtung und dem Gasturbinenläufer bzw. Teilen des Leitapparates möglich, so dass eine Drehung leicht vermittelt werden kann. Besonders bevorzugt weist die Drehvorrichtung eine vorbestimmte Drehachse auf, welche bei erfolgter Anbringung an dem Gehäuse der Gasturbine mit der Drehachse des Gasturbinenläufers zusammenfällt. Insofern kann unwuchtarm bzw. unwuchtfrei eine Drehbewegung auf den Gasturbinenläufer übertragen werden.

Gemäß einer weiteren besonders bevorzugten Ausführungsform der Erfindung ist vorgesehen, dass weiter wenigstens ein Adapterstück von der Drehvorrichtung umfasst ist, welches sowohl mit dem wenigstens einen Verbindungsabschnitt mechanisch verbunden ist, als auch mit der Teilfuge des Gehäuses der Gasturbine verbindbar ist. Das Adapterstück kann bspw. unterschiedlichen Anforderungen an Anbringung bzw. Befestigung an der Teilfuge des Gehäuses durch unterschiedliche Geometrieen Rechnung tragen. Ebenso können verschiedene Adapterstücke bei Anbringung auch unterschiedliche Längen aufweisen zwischen der Teilfuge und dem Verbindungsabschnitt der Drehvorrichtung. Somit kann eine Anpassung der Drehvorrichtung an verschiedene Gasturbinen komplikationslos ermöglicht werden. Insbesondere kann die Anbringung der Drehvorrichtung an unterschiedlichen Gehäusen verschiedener Gasturbinen erreicht werden, wie auch weiterhin eine mittige Ausrichtung in Bezug auf die Drehachse des Gasturbinenläufers.

Gemäß einer weiteren vorteilhaften Ausführungsform der Erfindung ist vorgesehen, dass der wenigstens eine erste Befestigungsabschnitt dazu ausgebildet ist, einen Seilzug zu haltern, und insbesondere ein Auge, bevorzugt ein bewegliches Auge aufweist. Ganz besonders bevorzugt ist das Auge als Öse oder als Schäkel ausgebildet. Der erste Befestigungsabschnitt erlaubt somit die geeignete Führung und Halterung eines als Seilzug ausgebildeten Kraftübertragungsmittels, so dass eine geeignete Kraftum- und -einleitung von der Drehvorrichtung in den Seilzug erreicht werden kann. Ist das Auge beweglich ausgeführt, kann eine vorteilhafte und flexible Bedienung der Drehvorrichtung sowie eine schnelle und komplikationslose Verbindung von erstem Befestigungsabschnitt und Seilzug erreicht werden.

Gemäß einer weiteren besonders bevorzugten Ausführungsform der Erfindung ist vorgesehen, dass mindestens eine Manschette umfasst ist, die wenigstens einen zweiten Befestigungsabschnitt aufweist, wobei die Manschette dazu ausgebildet ist, kraftschlüssig mit dem Gasturbinenläufer verbunden zu werden. Die Manschette erlaubt somit die Krafteinleitung zur Beaufschlagung des Gasturbinenläufers mit einer Drehbewegung, ohne hierbei den Gasturbinenläufer selbst mit Befestigungsabschnitten versehen zu müssen. Die Manschette hat insbesondere zwei Aufnahmeabschnitte, welche an die Querschnittsumfangsform des Gasturbinenläufers angepasst sind, so dass bei geeigneter Anbringung an den Gasturbinenläufer eine kraftschlüssige Verbindung erreicht werden kann. Durch eine Kraftbeaufschlagung des wenigstens einen zweiten Befestigungsabschnitts an der Manschette kann so über die Manschette vermittelt der Gasturbinenläufer mit einer Drehbewegung beaufschlagt werden.

Gemäß einer Weiterbildung dieser bevorzugten Ausführungsform ist vorgesehen, dass der wenigstens eine zweite Befestigungsabschnitt dazu ausgebildet ist, einen Seilzug zu haltern und insbesondere ein Auge, bevorzugt ein bewegliches Auge aufweist. Bevorzugt ist das Auge wiederum als Öse bzw. als Schäkel ausgebildet. Durch die geeignete Halterung bzw. Führung des Seilzugs über den zweiten Befestigungsabschnitt ist wiederum eine geeignete Kraftumleitung bzw. Kraftbeaufschlagung des zu drehenden Bauteils mittels des Seilzugs möglich. Besonders bei einer Ausführung des wenigstens einen zweiten Befestigungsabschnittes als bewegliches Auge kann eine flexible und leichte Verbindung zwischen Seilzug und zweitem Befestigungsabschnitt herbeigeführt werden.

Gemäß einer weiteren nachfolgenden alternativen Ausführungsform, welche sich diesen Aspekt zunutze macht, kann vorgesehen sein, dass die mindestens eine Manschette wenigstens teilweise eine Umfangsform aufweist, welche der Umfangsform eines Leitapparates nachgebildet ist. Der Leitapparat wird, wie oben bereits ausgeführt, hierbei typischerweise von dem Gehäuse der Gasturbine umschlossen und umgibt selbst den Gasturbinenläufer. Der Leitapparat dient in erster Linie der Strömungsführung der fluiddynamisch aktiven Bereiche der Gasturbine und umfasst insbesondere die Leitschaufeln, bzw. einzelne Reihen von Leitschaufeln. Durch die bereichsweise Nachbildung der Umfangsform des Leitapparates kann die Manschette bei erfolgender Drehung sich in geeigneter Weise gegen die Innenwand der mit der Drehvorrichtung verbundenen Gehäuseteile abstützen, so dass die Drehbewegung unter unveränderlicher Beabstandung zwischen äußerer Umfangsform der Manschette und den inneren Wandungen der Gehäuseteile erfolgen kann. Damit ist eine kontrollierte Drehung ohne übermäßige Kraftaufwendung zum Ausgleichen von ungewünschten Unwuchten möglich. Die Umfangsform der Manschette folgt jedoch der Umfangsform des Leitapparates nur in denjenigen Bereichen, welche aus den Gehäuseteilen herausgedreht werden können. Nach erfolgter Herausdrehung kann so die Manschette die Funktion der herausgedrehten Teile des Leitapparates hinsichtlich der Kraftabstützung gegen die Gehäuseteile übernehmen.

Entsprechend einer weiteren besonders bevorzugten Ausführungsform der erfindungsgemäßen Drehvorrichtung ist vorgesehen, dass die Drehvorrichtung eine im Wesentlichen U-förmige Geometrie aufweist, deren Endstücke jeweils einen Verbindungsabschnitt zur Anbringung auf einer Teilfuge des Gehäuses der Gasturbine aufweisen. Die U-förmige Geometrie der Drehvorrichtung ermöglicht nicht nur eine leichte Handhabung sondern auch eine gute Kontrolle der Kräfte, die zur Herbeiführung einer Drehbewegung aufgewendet werden müssen. Ebenso kann aufgrund der U-förmigen Geometrie eine leichte und vorteilhafte Anbringung der Drehvorrichtung im Ganzen über die Verbindungsabschnitte an den Teilfugen des Gehäuses der Gasturbine erreicht werden.

Gemäß einer Weiterbildung dieser Ausführungsform ist vorgesehen, dass im Bereich des Scheitels der im Wesentlichen U-förmigen Drehvorrichtung wenigstens ein erster Befestigungsabschnitt vorgesehen ist. Der Scheitel ist hierbei der im Wesentlichen höchste Punkt bei erfolgter Anbringung der Drehvorrichtung an den Gehäuseteilen der Gasturbine, so dass über diesen eine gleichmäßige Abstützung der Drehvorrichtung gegen die Teilfugen der Gehäuseteile gut erreicht werden kann. Zudem ist dieser Punkt gut erreichbar und fördert damit die Bedienfreundlichkeit der Drehvorrichtung.

Gemäß einer weiteren besonders bevorzugten Ausführungsform der erfindungsgemäßen Drehvorrichtung sind mindestens zwei erste Befestigungsabschnitte vorgesehen, die insbesondere dazu ausgebildet sind, einen Seilzug zu haltern und insbesondere als Augen, besonders bevorzugt als bewegliche Augen ausgebildet sind. Über die mindestens zwei ersten Befestigungsabschnitte können bspw. wenigstens zwei unterschiedliche Kraftübertragungsmittel bzw. Seilzüge mit der Drehvorrichtung verbunden werden, um in kontrollierter Weise an möglicherweise unterschiedlichen Orten bzw. zu unterschiedlichen Zeiten verschiedene Kräfte in das zu drehende Bauteil der Gasturbine einzuleiten. Hierdurch kann das zu drehende Bauteil abschnittsweise über vorbestimmte Winkelbereiche gedreht werden, wodurch eine hohe Kontrolle über den Drehvorgang erreicht werden kann. Ebenso kann die Drehsicherheit erhöht werden, da der Drehvorgang stets über ein Kraftübertragungsmittel, welches mit einem Befestigungsabschnitt verbunden ist, gesichert sein kann.

Gemäß einer besonders kostengünstigen und leicht bereitzustellenden Ausführungsform der Erfindung kann die Drehvorrichtung einen oder mehrere Stahlträger umfassen, welche insbesondere als Stahlträger einer Doppel-T-Querschnittsform ausgebildet sind. Solche Stahlträger werden typischerweise im Gerüst- bzw. Kranbau eingesetzt und sind leicht verfügbar. Ebenso eignen sich diese Stahlträger besonders zur sicheren Kraftübertragung in verschiedene Raumrichtungen.

Gemäß einer ersten besonders bevorzugten Ausführungsform des erfindungsgemäßen Verfahrens ist vorgesehen, dass das Drehen des Bauteils kraftgesteuert erfolgt. So kann bspw. das Kraftübertragungsmittel mit einem geeigneten Kraftmessgerät (z.B. Krafttrommel) zusammenarbeiten, um eine Kraftsteuerung zu gewährleisten. Die Kraftsteuerung ermöglicht eine hohe Kontrolle über den Drehvorgang, so dass sicher und effizient gearbeitet werden kann.

Gemäß einer weiteren besonders bevorzugten Ausführungsform des erfindungsgemäßen Verfahrens ist vorgesehen, dass das Drehen winkelgesteuert erfolgt, insbesondere durch mehrmaliges Ändern der Befestigung von erstem Befestigungsabschnitt und dem Kraftübertragungsmittel und jeweils nachfolgender Beaufschlagung des Kraftübertragungsmittels mit einer Kraft zum Drehen um einen vorgegebenen Winkelbereich. Alternativ können auch mehrere Kraftübertragungsmittel vorgesehen sein, welche gleichzeitig bzw. nacheinander entsprechend mit geeigneten Kräften beaufschlagt werden, die ein winkelgesteuertes Drehen des Bauteils zur Folge haben. Durch die Drehung über einen vorbestimmten Winkelbereich kann wiederum ein hoher Grad an Kontrolle über den Drehvorgang erreicht werden, der ein effizientes und sicheres Arbeiten ermöglicht.

Nachfolgend soll die Erfindung anhand von einzelnen Figuren im Detail beschrieben werden. Hierbei ist darauf hinzuweisen, dass die Figuren lediglich schematisch zu verstehen sind, und keine Einschränkung hinsichtlich der Ausführbarkeit der Erfindung erlauben.

Weiter sei darauf hingewiesen, dass Bauteile mit gleichen Bezugszeichen gleiche technische Wirkungsweisen haben.

Ebenso sei darauf hingewiesen, dass vorliegend die in den Figuren dargestellten technischen Merkmale in beliebiger Kombination miteinander beansprucht werden, soweit diese Kombination die der Erfindung zugrundeliegenden Aufgaben lösen kann.

Hierbei zeigen:
- Figur 1: eine erste Ausführungsform der erfindungsgemäßen Drehvorrichtung in perspektivischer seitlicher Darstellung in einem auf einem Gehäuseteil angebrachten Zustand;
- Figur 2: eine weitere Ausführungsform der erfindungsgemäßen Drehvorrichtung 1 in perspektivischer seitlicher Darstellung in einem auf einem Gehäuseteil angebrachten Zustand;
- Figur 3: eine erste Ausführungsform des erfindungsgemäßen Verfahrens in einer flussdiagrammatischen Darstellung;
- Figur 4: eine weitere Ausführungsform des erfindungsgemäßen Verfahrens in einer flussdiagrammatischen Darstellung.

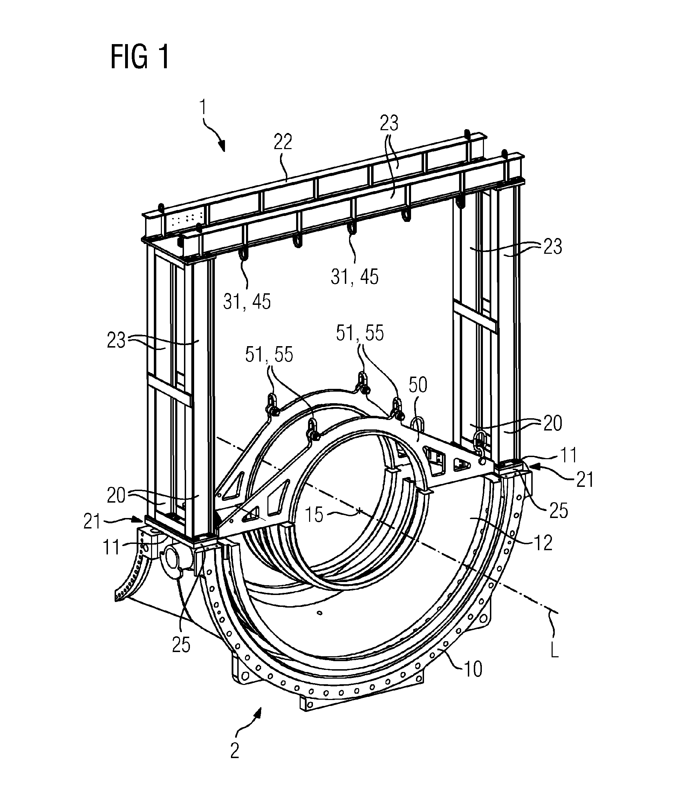

Figur 1 zeigt eine Drehvorrichtung 1, welche über einen Verbindungsabschnitt 21 mit einem Adapterstück 25 an einer Teilfuge 11 des Gehäuses 10 der Gasturbine 2 angebracht ist. Die Drehvorrichtung weist im Wesentlichen U-förmige Geometrie auf, und ist aus insgesamt sechs miteinander verschraubten bzw. verschweißten Stahlträgern ausgebildet. Das von der Gasturbine 2 dargestellte Gehäuseteil ist die untere Gehäusehälfte nach Entfernung der nicht weiter gezeigten oberen Hälfte des Gehäuses 10. In dieser unteren Hälfte des Gehäuses 10 befindet sich ebenfalls eine Hälfte eines Leitapparates 12 angeordnet, von welchem die obere Hälfte des Leitapparates 12 bereits abgenommen wurde (vorliegend nicht gezeigt). Die untere Hälfte des Gehäuses 10 sowie die untere Hälfte des Leitapparats 12 liegen im Wesentlichen unverdreht gegeneinander vor.

Um nun die Drehvorrichtung 1 mit dem unteren Teil des Gehäuses 10 zu verbinden, werden zweiseitig jeweils ein Verbindungsabschnitt 21 eines Endstücks 20 mit einer zugeordneten Teilfuge 11 des Gehäuses 10 kontaktiert und beide miteinander verschraubt. Im oberen Bereich des Scheitels 22 befinden sich darüber hinaus erste Befestigungsabschnitte 31 angeordnet, welche als Augen 45 ausgebildet sind. Die ersten Befestigungsabschnitte 31 sind hierbei so ausgeführt, dass sie mit einem Kraftübertragungsmittel 40 (vorliegend nicht gezeigt) in geeigneter Form zusammenwirken können. Hierbei erfolgt die Kraftabstützung über die von der Drehvorrichtung 1 umfassten Stahlträger 23 und die Krafteinleitung über die Teilfugen 11 in den unteren Teil des Gehäuses 10.

Entsprechend der vorliegend gezeigten Ausführungsform umfasst die Drehvorrichtung 1 weiterhin zwei Manschetten 50, welche im Wesentlichen gleich geformt sind. Die Manschetten 50 weisen hierbei einen kreisförmigen Aufnahmeabschnitt auf, in welchen der Gasturbinenläufer 15 (vorliegend nicht gezeigt) aufgenommen werden kann. Durch eine form- und kraftschlüssige Verbindung von Gasturbinenläufer 15 und den beiden Manschetten 50 kann vermittelt über die Manschetten 50 eine Kraftbeaufschlagung des Gasturbinenläufers 15 bewirkt werden. Hierzu weisen die beiden Manschetten 50 jeweils zwei zweite Befestigungsabschnitte auf, die ebenfalls als Augen 55 ausgeführt sind. Insbesondere sind die Augen 55 als Schäkel ausgebildet.

Die Manschetten 50 sind darüber hinaus mit jeweils zwei nicht weiter mit Bezugszeichen versehenen Abstützarmen versehen, welche sich gegen die Teilfugen des unteren Teils des Leitapparates 12 verspannen lassen bzw. verspannt sind. Insbesondere sind eine Verschraubung und/oder eine Verklammerung zur Herbeiführung dieser Verspannung denkbar. Dadurch kann eine geeignete Zentrierung der Manschetten 50 erreicht werden sowie eine gleichmäßige Drehbewegung von Gasturbinenläufer 15 und Leitapparat 12. Werden also die Manschetten 50 mit einer Kraft beaufschlagt, kommt es gleichzeitig zu einer Drehung des Gasturbinenläufers 15 wie auch zu einer Drehung des unteren Teils des Leitapparates 12.

Hierbei ist es im Normalfall erforderlich, dass die Drehung konzentrisch zu der Längsachse L des vorliegend nicht gezeigten Turbinenläufers 15 erfolgt. Insofern umfassen die Manschetten 50 den Gasturbinenläufer 15 konzentrisch.

Durch eine geeignete Kombination von Kraftübertragungen zwischen den ersten Befestigungsabschnitten 31 und den zweiten Befestigungsabschnitten 51 kann nun mittels eines Kraftübertragungsmittels eine Drehung vermittelt werden. Hierbei ist darauf zu achten, dass geeignete Hebel zur Vermittlung der Drehung ausgewählt werden. Dem Fachmann ist verständlich, dass bei Wahl eines größeren Hebels eine Drehung bei verhältnismäßig kleinerem Kraftaufwand erfolgen kann.

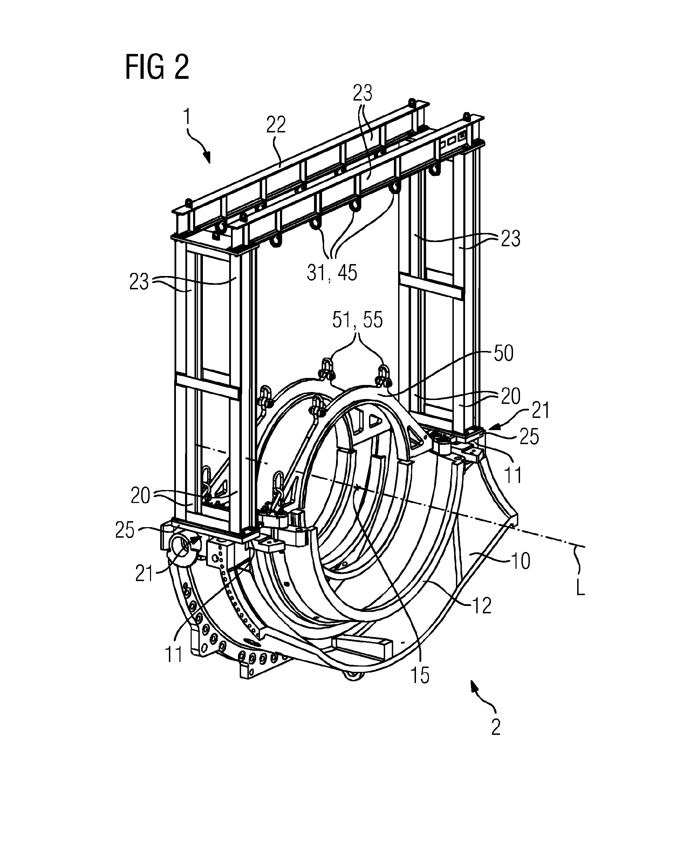

Figur 2 zeigt eine weitere Ausführungsform der erfindungsgemäßen Drehvorrichtung 1, welche sich von der in Figur 1 gezeigten Drehvorrichtung 1 im Wesentlichen dadurch unterscheidet, dass eine Vielzahl von ersten Befestigungsabschnitten 31 im Bereich des Scheitels 22 der Drehvorrichtung 1 vorgesehen sind. Durch die größere Anzahl an ersten Befestigungsabschnitten 31 kann so eine höhere Genauigkeit des Drehvorganges erreicht werden, indem mehr Kombinationen bereitstehen, die erlauben, mittels eines Kraftübertragungsmittels die ersten Befestigungsabschnitte 31 und die zweiten Befestigungsabschnitte 51 zu verbinden. Insbesondere erlaubt die Vielzahl an ersten Befestigungsabschnitten 31 eine im Wesentlichen gut winkelgesteuerte Drehung.

Dem Fachmann ist verständlich, dass sowohl eine beliebige Anzahl an ersten Befestigungsabschnitten 31 wie auch eine beliebige Anzahl an zweiten Befestigungsabschnitten 51 vorgesehen sein können. Insbesondere kann erfindungsgemäß auch auf das Vorsehen einer Manschette 50 verzichtet werden, wobei bspw. die Beaufschlagung des Leitapparates 12 mit einer Drehbewegung über weitere vorliegend nicht gezeigte zweite Befestigungsabschnitte 51 erfolgen kann, die an dem Leitapparat 12 angebracht sind bzw. in diesem vorgesehen sind.

An dieser Stelle sei auch darauf hingewiesen, dass als 2013Kraftübertragungsmittel 40 alle für die Herbeiführung einer Drehbewegung geeigneten Kraftübertragungsmittel vorgesehen sein können. Im einfachsten Fall kann dies ein Seilzug sein. Der erfindungsgemäße Vorteil liegt darin, dass durch Vorsehen solcher leichter und kostengünstiger Kraftübertragungsmittel 40 der Einsatz von Mobilkränen oder auch Maschinenhauskränen vermieden werden kann.

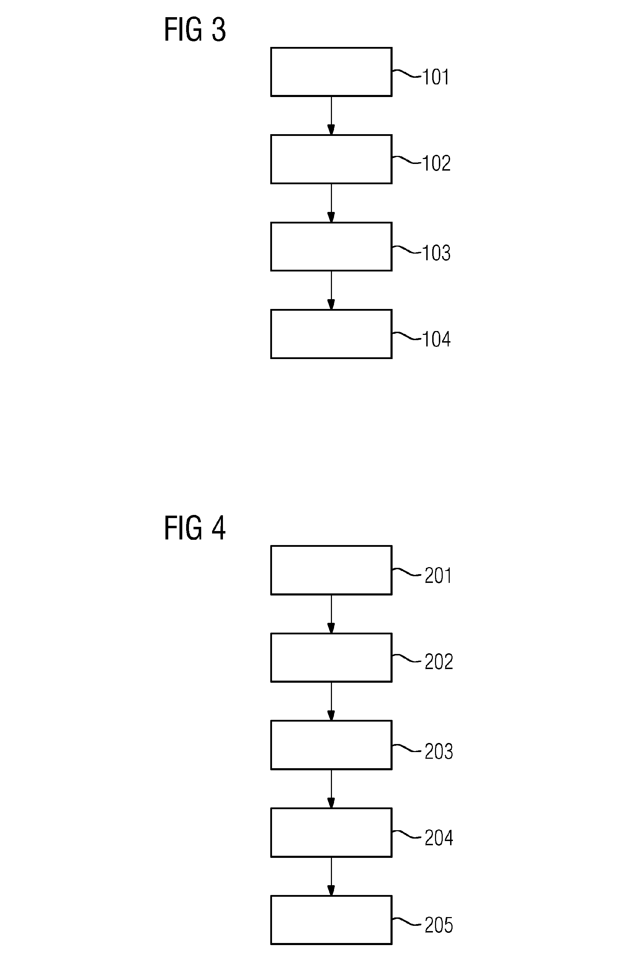

Figur 3 zeigt eine erste Ausführungsform des erfindungsgemäßen Verfahrens zum Drehen eines Bauteils einer wenigstens teilweise geöffneten Gasturbine 2 mittels einer weiter oben beschriebenen Drehvorrichtung 1, wobei die folgenden Schritte umfasst sind:
- Anbringen wenigstens eines Verbindungsabschnitts 21 der Drehvorrichtung 1 auf einer Teilfuge 11 des Gehäuses 10 der Gasturbine 2 (erster Verfahrensschritt 101);
- Befestigen eines Kraftübertragungsmittels 40, insbesondere wenigstens eines Seilzugs 40 an dem Leitapparat 12 der Gasturbine 2 (zweiter Verfahrensschritt 102);
- Befestigen des Kraftübertragungsmittels 40 an dem wenigstens einen ersten Befestigungsabschnitt 31 der Drehvorrichtung 1 (dritter Verfahrensschritt 103);
- Beaufschlagen des Kraftübertragungsmittels 40 mit einer Kraft zum Drehen des Leitapparats 12 der Gasturbine 2 (vierter Verfahrensschritt 104).

Figur 4 zeigt eine weitere Ausführungsform des erfindungsgemäßen Verfahrens zum Drehen eines Bauteils einer wenigstens teilweise geöffneten Gasturbine 2, wie oben beschrieben, mittels einer Drehvorrichtung 1, wie ebenfalls weiter oben beschrieben, wobei die folgenden Schritte umfasst sind:
- Anbringen wenigstens eines Verbindungsabschnitts 31 der Drehvorrichtung 1 auf einer Teilfuge 11 des Gehäuses 10 der Gasturbine 2 (erster Verfahrensschritt 201);
- Kraftschlüssiges Verbinden der Manschette 50 mit dem Gasturbinenläufer 15 der Gasturbine 2 (zweiter Verfahrensschritt 202);
- Befestigen eines Kraftübertragungsmittels 40, insbesondere wenigstens eines Seilzugs 40 an dem wenigstens einen zweiten Befestigungsabschnitt 51 der Manschette 50 (dritter Verfahrensschritt 203);
- Befestigen des Kraftübertragungsmittels 40 an dem wenigstens einen ersten Befestigungsabschnitt 31 (vierter Verfahrensschritt 204);
- Beaufschlagen des Kraftübertragungsmittels 40 mit einer Kraft zum Drehen des Gasturbinenläufers 15 (fünfter Verfahrensschritt 205).

Weitere Ausführungsformen ergeben sich aus den Unteransprüchen.

## Patentansprüche

1. Drehvorrichtung (1) für eine wenigstens teilweise geöffnete Gasturbine (2), welche dazu ausgebildet ist, auf einer Teilfuge (11) des Gehäuses (10) der wenigstens teilweise geöffneten Gasturbine (2) über wenigstens einen Verbindungsabschnitt (21) angebracht zu werden, wobei die Drehvorrichtung (1) wenigstens einen ersten Befestigungsabschnitt (31) aufweist, der dazu ausgebildet ist, mit einem Kraftübertragungsmittel (40), insbesondere wenigstens einem Seilzug (40) mechanisch zusammenzuwirken, um eine drehende Bewegung mindestens eines Bauteils der wenigstens teilweise geöffneten Gasturbine (2) mechanisch zu vermitteln.

2. Drehvorrichtung nach Anspruch 1,
**dadurch gekennzeichnet, dass** die Drehvorrichtung (1) bei erfolgter Anbringung an dem Gehäuse (10) einen Gasturbinenläufer (15) der wenigstens teilweise geöffneten Gasturbine (2) teilweise umgibt.

3. Drehvorrichtung nach einem der vorhergehenden Ansprüche,
**dadurch gekennzeichnet, dass** weiter wenigstens ein Adapterstück (25) umfasst ist, welches sowohl mit dem wenigstens einen Verbindungsabschnitt (21) mechanisch verbunden ist, als auch mit der Teilfuge (11) des Gehäuses (10) der Gasturbine (2) verbindbar ist.

4. Drehvorrichtung nach einem der vorhergehenden Ansprüche,
**dadurch gekennzeichnet, dass** der wenigstens eine erste Befestigungsabschnitt (31) dazu ausgebildet ist, einen Seilzug (40) zu haltern, und insbesondere ein Auge (45), bevorzugt ein bewegliches Auge (45) aufweist.

5. Drehvorrichtung nach einem der vorhergehenden Ansprüche,
**dadurch gekennzeichnet, dass** dass mindestens eine Manschette (50) umfasst ist, die wenigstens einen zweiten Befestigungsabschnitt (51) aufweist, wobei die Manschette (50) dazu ausgebildet ist, kraftschlüssig mit dem Gasturbinenläufer (15) verbunden zu werden.

6. Drehvorrichtung nach Anspruch 5,
**dadurch gekennzeichnet, dass** der wenigstens eine zweite Befestigungsabschnitt (51) dazu ausgebildet ist, einen Seilzug (40) zu haltern, und insbesondere ein Auge (55), bevorzugt ein bewegliches Auge (55) aufweist.

7. Drehvorrichtung nach Anspruch 5 oder 6,
**dadurch gekennzeichnet, dass** die mindestens eine Manschette (50) wenigstens teilweise eine Umfangsform aufweist, welche der Umfangsform eines Leitapparats (12) nachgebildet ist.

8. Drehvorrichtung nach einem der vorhergehenden Ansprüche,
**dadurch gekennzeichnet, dass** dass die Drehvorrichtung (1) eine im Wesentlichen U-förmige Geometrie aufweist, deren Endstücke (20) jeweils einen Verbindungsabschnitt (21) zur Anbringung auf einer Teilfuge (11) des Gehäuses (10) der Gasturbine (2) aufweisen.

9. Drehvorrichtung nach Anspruch 8,
**dadurch gekennzeichnet, dass** im Bereich des Scheitels (22) der im Wesentlichen U-förmigen Drehvorrichtung (1) wenigstens ein erster Befestigungsabschnitt (31) vorgesehen ist.

10. Drehvorrichtung nach einem der vorhergehenden Ansprüche,
**dadurch gekennzeichnet, dass** mindestens zwei erste Befestigungsabschnitte (31) vorgesehen sind, die insbesondere dazu ausgebildet sind, einen Seilzug (40) zu haltern, und insbesondere als Augen (45), bevorzugt als bewegliche Augen (45) ausgebildet sind.

11. Drehvorrichtung nach einem der vorhergehenden Ansprüche,
**dadurch gekennzeichnet, dass** die Drehvorrichtung (1) einen oder mehrere Stahlträger (23) umfasst, insbesondere Stahlträger (23) einer Doppel-T-Querschnittsform.

12. Verfahren zum Drehen eines Bauteils einer wenigstens teilweise geöffneten Gasturbine (2) mittels einer Drehvorrichtung (1) gemäß einem der vorhergehenden Ansprüche, wobei die folgenden Schritte umfasst sind:
- Anbringen wenigstens eines Verbindungsabschnitts (21) der Drehvorrichtung (1) auf einer Teilfuge (11) des Gehäuses (10) der Gasturbine (2);
- Befestigen eines Kraftübertragungsmittels (40), insbesondere wenigstens eines Seilzugs (40) an dem Leitapparat (12) der Gasturbine (2);
- Befestigen des Kraftübertragungsmittels (40) an dem wenigstens einen ersten Befestigungsabschnitt (31) der Drehvorrichtung (1);
- Beaufschlagen des Kraftübertragungsmittels (40) mit einer Kraft zum Drehen des Leitapparats (12) der Gasturbine (2) ;

13. Verfahren zum Drehen eines Bauteils einer wenigstens teilweise geöffneten Gasturbine (2) mittels einer Drehvorrichtung (1) gemäß einem der vorhergehenden Ansprüche 5 bis 11, wobei die folgenden Schritte umfasst sind:
- Anbringen wenigstens eines Verbindungsabschnitts (31) der Drehvorrichtung (1) auf einer Teilfuge (11) des Gehäuses (10) der Gasturbine (2);
- Kraftschlüssiges Verbinden der Manschette (50) mit dem Gasturbinenläufer (15) der Gasturbine (2).
- Befestigen eines Kraftübertragungsmittels (40), insbesondere wenigstens eines Seilzugs (40) an dem wenigstens einen zweiten Befestigungsabschnitt (51) der Manschette (50) ;
- Befestigen des Kraftübertragungsmittels (40) an dem wenigstens einen ersten Befestigungsabschnitt (31);
- Beaufschlagen des Kraftübertragungsmittels (40) mit einer Kraft zum Drehen des Gasturbinenläufers (15);

14. Verfahren nach Anspruch 12 oder 13,
**dadurch gekennzeichnet, dass** das Drehen kraftgesteuert erfolgt.

15. Verfahren nach Anspruch 12 bis 14,
**dadurch gekennzeichnet, dass** das Drehen winkelgesteuert erfolgt, insbesondere durch mehrmaliges Ändern der Befestigung von erstem Befestigungsabschnitt (31) und dem Kraftübertragungsmittel (40) und jeweils nachfolgender Beaufschlagen des Kraftübertragungsmittels (40) mit einer Kraft zum Drehen um einen vorgegebenen Winkelbereich.
